# EUROPEAN PATENT SPECIFICATION

(11) **EP 4 298 392 B1**
(45) Date of publication and mention of the grant of the patent: **25.06.2025**
(21) Application number: 22704413.8
(22) Date of filing: 08.02.2022
(51) Int. Cl.: F28D 7/16, F28F 9/16, F28D 21/00, B01J 8/06, C01B 3/38, F28F 9/22

(54) **HEAT EXCHANGE REACTOR SEAL APPARATUS**
DICHTUNGSVORRICHTUNG FÜR WÄRMEAUSTAUSCHREAKTOR
APPAREIL D'ÉTANCHÉITÉ POUR RÉACTEUR D'ÉCHANGE DE CHALEUR

(30) Priority: 26.02.2021 GB 202102787
(43) Date of publication of application: 03.01.2024
(73) Proprietor: Johnson Matthey Public Limited Company, London EC2V 7AD (GB)
(72) Inventor: FARNELL, Peter William, Cleveland TS23 1LB (GB); GRAHAM, Simon, London Greater London W2 6LG (GB)
(74) Representative: Johnson Matthey Plc
(86) International application number: PCT/GB2022/050318
(87) International publication number: WO 2022/180354

(56) References cited:
- EP-A2- 0 983 964
- WO-A1-97/05947

## Description

This invention relates to seal apparatus and its use in a heat exchange reactors and processes using such apparatus, in particular in catalytic steam reforming processes.

In heat exchange reactor apparatus containing externally heated tubes, there is liable to be significant differential thermal expansion between tubes carrying the process fluid and means, such as a tube sheet, defining a boundary of a zone through which a heat exchange medium passes in heat exchange with the process fluid passing through the tubes. Where tubes are heated by a heat exchange medium flowing around the exterior of the tubes that is at a lower pressure than the process fluid passing through the tubes, one solution has been to employ a seal device connected to each tube comprising a seal tube and movably disposed within the seal tube an inner tube having a constriction that provides a low-pressure region and which also has passages though the wall of the inner tube connecting the low-pressure region to the exterior of the inner tube. In this way, process fluid mixing with the heat exchange medium is prevented or reduced. WO9705947 discloses such apparatus.

The Applicant has found that disrupting the flow of heat exchange medium within the seal device by creating turbulence in the annular space between the exterior of the inner tube and the interior of the seal tube can reduce the amount of mixing of the heat exchange medium with the process fluid.

Accordingly, the invention provides a tube seal according to claim 1.

The invention further provides a heat exchange reactor comprising one or more heat exchange tubes comprising the tube seal device and a process using the reactor and tube seal device. The heat exchange reactor apparatus including the tube seal device is of particular utility where heat exchange medium flowing around the exterior of the tubes is at a lower pressure than a process fluid passing through the tubes.

By providing the grooves on the interior of the seal tube rather than on the exterior of the inner tube, fouling of the inner tube by material being carried there by the heat exchange medium is reduced. This improves the long-term performance of the tube seal device and can simplify maintenance by allowing the fouled seal tube to be replaced during routine maintenance. Moreover, providing the grooves on the interior of the seal tube allows potentially a greater number of grooves to be present.

To reduce mixing of the process fluid and heat exchange medium further, there may additionally be one or more grooves in the overlapping region corresponding to the expansion region of the inner tube. The one or more grooves in the expansion region may be on an outer face of the inner tube or on the inner face of the seal tube. Preferably, the one or more grooves in the overlapping region corresponding to the expansion region of the inner tube are disposed on the outer face of the inner tube because this simplifies fabrication.

Heat exchange reactor apparatus including the tube seal device may include a process fluid feed zone, a heat exchange zone, and a process fluid off-take zone, first and second boundary means separating said zones from one another, one or more heat exchange tubes fastened to one of said boundary means and extending through the heat exchange zone. Process fluid can flow from the process fluid feed zone, through the one or more heat exchange tubes and into the process fluid off-take zone. For each heat exchange tube, a tube seal device is provided. The seal tube of the tube seal device may be fastened to one of said boundary means. The inner tube of the tube seal device is provided on each heat exchange tube. The seal tube is disposed substantially coaxially with the inner tube such that the inner tube is in sliding engagement with its associated seal tube thereby forming the overlapping region.

Each inner tube of the tube seal device is provided with (i) an interior constriction of reduced cross sectional area forming a low-pressure region within the inner tube, (ii) an expansion region of cross sectional area greater than that of the constriction downstream of said constriction, and (iii) one or more passages through the wall of the inner tube connecting said low-pressure region to the exterior of the inner tube, said passages being located within said overlapping region thereby providing a flow path for fluid from the heat exchange zone through said overlapping region into said low-pressure region within said inner tube.

Each tube seal device comprises one or more grooves formed around an inner face of the seal tube in the overlapping region corresponding to the low-pressure region of the inner tube.

In a heat exchange reactor of the above type, a process fluid is passed from a process fluid feed zone, through one or more heat exchange tubes disposed within a heat exchange zone defined by a casing through which a heat exchange medium passes, and then into a process fluid off-take zone. Means, such as tube sheets, are provided to separate the zones. Thus a tube sheet may separate the heat exchange zone through which the heat exchange medium passes from a zone, such as a plenum chamber, communicating with the interior of the heat exchange tubes to permit feed of process fluid to the tubes or off-take of process fluid from the tubes. An alternative arrangement involves the use of header pipes disposed within the heat exchange zone to define the process fluid feed zone: the process fluid is fed to the header pipes from whence it flows into and through the heat exchange tubes. Similarly, header pipes may be provided for the off-take of process fluid from the tubes. Alternatively, there may be a combination of tube sheets and header pipes. Such tube sheets or headers are herein termed boundary means as they define boundaries between the heat exchange zone and the process fluid feed and off-take zones.

By providing the inner tube on the heat exchange tube and by connecting the seal tube to the boundary means in the heat exchange reactor, longitudinal movement caused by thermal expansion and contraction of the heat exchange tubes may be accommodated.

In use, because of the low-pressure region in the inner tube, heat exchange medium may be drawn into the interior of the inner tube where it mixes with the process fluid flowing through the inner tube.

The heat exchange reactor may contain one or more heat exchange tubes, for example 1 to 10 tubes, but heat exchange reactors, for example used in steam reforming processes, may contain tens or even hundreds of tubes, for example 10 to 2000 tubes. The tubes may be 25-150 mm internal diameter and the wall thickness of the tubes may be in the range 2-13 mm depending on the size of the tubes. The tubes may be 5-15 metres in length. It is at such lengths, particularly at 10-15 metres, that the longitudinally expansion becomes particularly problematic without the use of the tube seal device. The tubes may be fabricated from suitable metals such as stainless steel. The heat exchange reactor may comprise one or more transverse baffles to cause the heat exchange medium to move in a serpentine manner through the heat exchange zone and thereby enhance the exchange of heat.

The tube seal device comprises an inner tube. The inner tube may be connected to one end of the heat exchange tube or may be formed as an end portion of the heat exchange tube. The inner tube may have the same diameter as the heat exchange tube or, preferably, a narrower diameter than the heat exchange tube. The inner tube may be polygonal or cylindrical but is preferably shaped so that an even clearance space is formed between the outer face of the inner tube and the inner face of the seal tube in the overlapping region. The inner tube has an internal constriction forming a low-pressure region within the tube and an expanded portion adjacent the constriction forming an expansion zone within the tube. One or more passages through the wall of the inner tube connect the low-pressure region with the exterior of the inner tube. There may be between 1 and 20 passages connecting the low-pressure region with the exterior of the inner tube. The passages are desirably evenly spaced to open into the clearance space between the inner tube and the seal tube. In use, the device is orientated such that the expansion zone is located downstream of the low-pressure zone. For example, in a vertical down-flow arrangement, with the tube seal device located at the lowermost end of the heat exchange tube, the expansion region will be below the constriction in the inner tube. The relative sizes of the constriction, low-pressure region and expansion region will depend in part on the tube size. For example, in one embodiment including a heat exchange tube of internal diameter about 100 mm, the portion of tubes forming the inner tube may have an internal dimension of about 25 mm, tapering internally to a constriction of about 12 mm internal diameter opening into a low-pressure region of about 18 mm internal diameter and about 108 mm length. At the end of the low-pressure region, the inner tube may be flared from the 18 mm diameter to about 31 mm external diameter over a length of about 78 mm. Twelve evenly spaced passages of 3 mm diameter may be provided between the low-pressure region and the exterior of the inner tube.

A clearance space, for example an annular gap, will exist between the inner face of the seal tube and the outer face of the inner tube in the overlapping region. The inner tube is thereby free to move longitudinally within the seal tube. The thickness of the clearance gap between the inner face of the seal tubes and the exterior face of the inner tube part of the heat exchange tubes may be about 0.1 to 0.5 mm. For example, in the embodiment described above, the gap may be about 0.2 mm.

The tube seal device also comprises a seal tube. The seal tube may be polygonal or cylindrical, but preferably has the same form as the inner tube so that an even clearance space is maintained. Tube seal devices comprising cylindrical seal tubes and cylindrical inner tubes are preferred because these are simpler to fabricate and are better adapted for use at elevated temperature under pressure.

The tube seal device comprises one or more grooves on the inner face of the seal tube. The one or more grooves on the inner face of the seal tube are formed on the inner face of the seal tube in the overlapping region corresponding to the low-pressure region of the inner tube. The one or more grooves on the inner face of the seal tube may be formed as crenellations, i.e. having a square or rectangular form, or the grooves may be U-shaped, V-shaped, or any combination of these. Square or rectangular-shaped grooves may provide improved turbulence in the overlapping region.

The grooves may be formed by cutting one or more channels into the inner face of the seal tube device. Alternatively, the grooves may be formed without cutting, for example by using a layered arrangement of different inside diameter rings inside the seal tube device, or by rolling a grooved profile in the seal tube device.

The size of the grooves may be from 2 to 20 mm in width, e.g. 6 to 14 mm in width, and 1 to 7 mm in depth depending on the size of the tube and the thickness of the tube wall. Desirably, the groove depth is no more than about 50% of the tube wall thickness for strength reasons. There may be between 1 and 30 grooves, e.g. between 2 and 25 grooves, preferably between 5 and 20 grooves, located on the seal tube in the overlapping region corresponding to the low-pressure region of the inner tube. This is an improvement over devices where the grooves are located on the inner tube where the number of grooves in this region is limited by the size of the inner tube to 8 or less. By placing the grooves on the inner wall of the seal tube, the grooves may extend beyond the low-pressure region.

There may additionally be one or more grooves in the overlapping region corresponding to the expansion region of the inner tube. Whether the one or more grooves are on the outer face of the inner tube or on the inner face of the seal tube, they may also be formed as crenellations, i.e. having a square or rectangular form, or the grooves may be U-shaped, V-shaped, or any combination of these. The size of the grooves in this region may also be from 2 to 20 mm in width, e.g. 6 to 14 mm in width, and 1 to 7 mm in depth. There may be the same number or a greater number of grooves in the expansion region than in the low-pressure region. For example, there may be between 1 and 30 grooves, e.g. between 2 and 25 grooves, preferably between 5 and 20 grooves, located on the inner face of the seal tube or the outer face of the inner tube in the overlapping region corresponding to the expansion region of the inner tube.

The one or more grooves are desirably arranged to disrupt the flow of gas through the tube seal device. The one or more grooves may be arranged perpendicular to the flow of process fluid through the inner tube, or the grooves may be formed in a spiral manner, such as a screw thread.

Where two or more grooves are present, in either the low-pressure or expansion regions, they are preferably parallel to each other.

The invention further provides a process according to claim 12.

In the process, part of the processed process fluid fed to the heat exchange zone passes into the tube seal device and through the one or more passages into the low pressure region.

In the process, the heat exchange medium is the process fluid that has passed through the tubes, but which has been subjected to further processing before being used as the heat exchange medium. This further processing preferably includes a step in which the process fluid is heated such that the heat exchange medium imparts heat to the one or more heat exchange tubes.

The tube seal device is of particular utility in a heat exchange steam reformer, or gas-heated reformer, i.e. a heat exchange reactor containing a one or more externally heated tubes containing a steam reforming catalyst through which a reformer feed is passed to generate a synthesis gas, and wherein the heat exchange is medium used to heat the tubes. In such processes the heat exchange medium is typically at lower pressure than the reformer feed.

The process and apparatus are of particular utility for steam reforming hydrocarbons wherein a mixture of a hydrocarbon feedstock and steam is passed through the heat exchange tubes which contain a steam reforming catalyst, for example a nickel-containing steam reforming catalyst, so as to form a primary reformed gas which is then subjected to partial combustion with an oxygen-containing gas and the resultant partially combusted gas is used as the heat exchange medium in the heat exchange zone. Preferably the partially combusted gas is passed through a bed of a secondary reforming catalyst, so as to effect further reforming, before being used as the heat exchange medium.

As a result of the constriction in the inner tube, a low-pressure region is formed within the inner tube: by suitably sizing the constriction, the pressure in the low-pressure region when in normal operation can be made lower than the pressure in the heat exchange zone so that there is a flow of heat exchange medium, e.g. the product of secondary reforming the process fluid taken from the process fluid off-take zone, from the heat exchange zone through the clearance space between the seal tube and the inner tube and through said passages in the wall of the inner tube into the low-pressure region. Downstream of the low-pressure region the process fluid expands in the expansion region giving a process fluid pressure greater than that in the low-pressure region. Consequently, there can also be a backflow, or recycle, of process fluid from the outlet end of the inner tube, through the clearance space, to the passages and into the low-pressure region.

The tube seal device is preferably provided at the boundary means between the heat exchange zone and the process fluid off-take zone. Thus, the seal tubes are preferably fastened to that boundary means while the one or more heat exchange tubes comprising the inner tubes are fastened to the boundary means, e.g. tube sheet, between the process fluid inlet zone and the heat exchange zone. In this arrangement, the inner tubes are formed at the end of the heat exchange tubes adjacent the boundary means between the heat exchange zone and the process fluid off-take zone and therefore engage with the seal tubes at this boundary means to form the tube seal device. This is especially preferred where the process fluid undergoes a substantial pressure drop as it passes through the heat exchange tubes, for example where the latter contain a catalyst. The seal tubes may project into the heat exchange zone from the boundary means or may extend back from the boundary means into the process fluid off-take zone, on the other side of the boundary means.

In steam reforming, hydrocarbon feedstock is typically a methane-containing gas. During the reforming process, methane reacts with steam to produce hydrogen and carbon oxides. Any hydrocarbons containing two or more carbon atoms that are present are converted to methane, carbon monoxide and hydrogen. Steam reforming reactions take place in the tubes over the steam reforming catalysts at temperatures above 350°C and typically the process fluid exiting the tubes is at a temperature in the range 650 to 950°C. The heat exchange medium flowing around the outside of the tubes may have a temperature in the range 500 to 2000°C.

The apparatus and process may be used as part of a process for the manufacture of hydrogen, methanol, dimethyl ether, olefins, ammonia, urea or hydrocarbon liquids, e.g. diesel fuels, obtained by the Fischer-Tropsch synthesis. Thus, a reformed gas mixture obtained using the apparatus or in the process of the present invention may be subjected to further process steps including a step of hydrogen separation, methanol synthesis, dimethyl ether synthesis, olefin synthesis, ammonia synthesis, or hydrocarbon liquid synthesis. Known processes may be used to accomplish these steps.

Although described above primarily in relation to heat exchange steam reforming, it will be appreciated that the invention is also of utility in other heat exchange applications where considerable differential thermal expansion has to be accommodated and leakage of the heat exchange medium into the process fluid is not objectionable. Examples include feed/effluent heat exchangers, for example where the feed to a process step such as an exothermic reaction, e.g. methanol or ammonia synthesis, is heated by heat exchange with the effluent from the process step. In such cases, the heat exchange tubes may be free of catalyst unless it is desired, as in the aforementioned reforming process, that a catalytic reaction is effected on the process fluid while it is undergoing the heat exchange.

The invention is further illustrated by reference to the accompanying drawings wherein:
Figure 1 is a diagrammatic cross section of a heat exchange reactor containing a tube seal device according to one embodiment of the invention, wherein the boundary means are tube sheets; and
Figure 2 is a cross section of a tube seal device according to one embodiment of the invention.

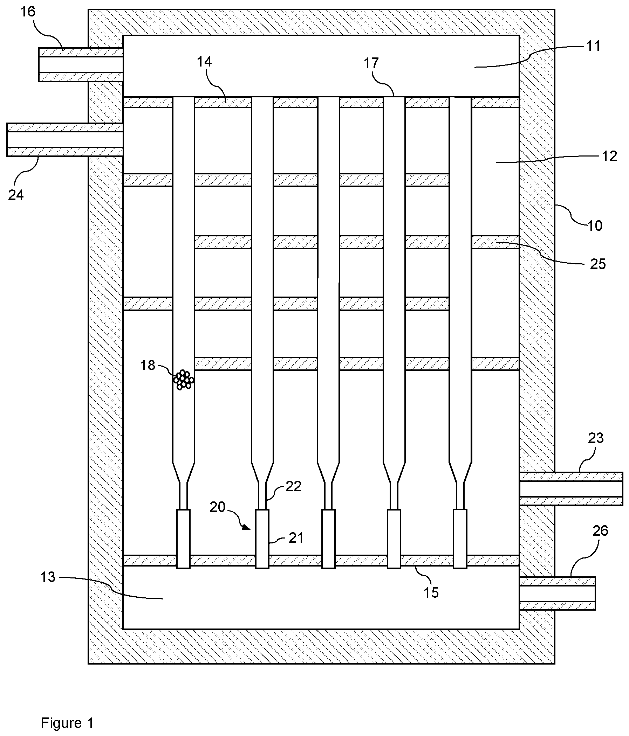

In Figure 1 there is shown a heat exchange steam reformer, having an outer insulated pressure shell 10 enclosing three zones 11, 12, 13, defined by the shell wall and tube sheets 14 and 15. Zone 11, a process fluid feed zone, is defined by the shell wall 10 and tube sheet 14. It is provided with a process fluid supply conduit 16 and has a plurality of vertical tubes, 17 fastened to, and extending downwards from, tube sheet 14. The number of tubes employed will depend on the scale of operation: although only five tubes are shown, there may be typically be 50 or more such tubes. The tubes 17 are filled with a steam reforming catalyst 18, for example multi-holed cylindrical pellets of a refractory oxide-supported nickel catalyst and/or a structured steam reforming catalyst. Zone 12, a heat exchange zone, is defined by the shell wall 10 and tube sheets 14 and 15. The heat exchange tubes 17 extend through the heat exchange zone 12 and engage with tube seal devices 20. The tube seal devices 20 each comprise a seal tube 21 fixed to the tube sheet 15 that engage, in the heat exchange zone 12, with catalyst-free inner tube sections 22 extending from the bottom of the catalyst-filled tubes 17. The heat exchange zone 12 is fed with a heating medium, e.g. a synthesis gas produced by autothermal or secondary reforming, via a conduit 23 positioned in the shell 10 near the bottom of the tubes 17. The heating medium passes upward in the heat exchange zone where it exchanges heat with the tubes 17 and is then removed from the heat exchange zone 12 via a conduit 24 positioned in the shell 10 near the top of the tubes 17. Transverse baffles 25 act to divert the heating medium horizontally across the reformer and enhance its heat exchange with the tubes 17. Zone 13, the process fluid off-take zone, is defined by the wall of shell 10 and the tube sheet 15. The tube seal devices 20 are open-ended and extend through the tube sheet 15 into the off-take zone 13. The reformed gases pass from the tubes 17 through the tube seal devices 20 and into the off-take zone 13 from which they are removed by a process fluid off-take conduit 26.

In use, a process fluid comprising hydrocarbon and steam is fed at elevated temperature and pressure through the conduit 16 to the process fluid feed zone 11 and thence downward through the catalyst-filled tubes 17. Heat is exchanged with heating medium in the heat exchange zone 12 and steam reforming reactions take place. The gas mixture undergoing reforming passes through the tubes 17 and thence though tube seal devices 20 to the off-take zone 13 from which it is removed by the off-take conduit 26. A reformed gas recovered from the off-take conduit 26 is subjected to further processing in which it is heated, in particular by autothermal or secondary reforming, and the further processed gas passed to the heat exchange reformer via conduit 23 as the heat exchange medium. The pressure of the heat exchange medium fed via conduit 23 is lower than the gas passing though the tubes 17.

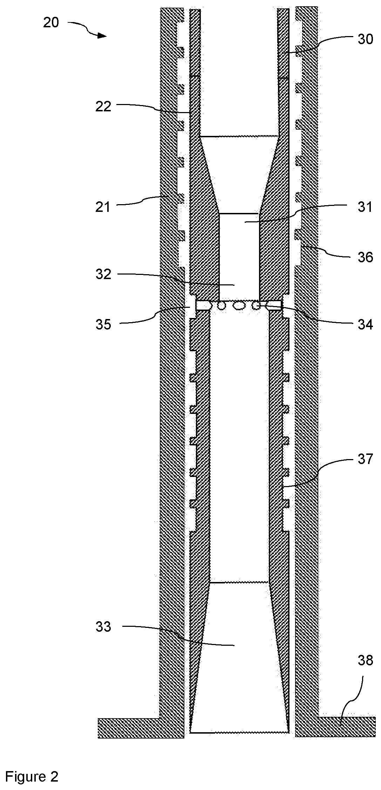

In Figure 2, a tube seal device 20 is depicted orientated vertically and arranged for downflow though the device in accordance with the embodiment depicted in Figure 1. The tube seal device 20 comprises an outer seal tube 21 and an inner tube 22. The inner tube 21 is located inside the seal tube 22 to provide an overlapping region and is free to slide vertically. In use, the inner tube 22 is fixed to a lowermost portion 30 of a heat exchange tube. The lowermost portion of the heat exchange tube 30 and connected part of the inner tube 22 have an internal diameter of 25 mm and are free of catalyst. The inner tube 22 tapers from the internal diameter of 25 mm to a constriction 31 of 12 mm internal diameter and expands from the constriction 31 to a low-pressure region 32 of 18 mm internal diameter and 108 mm length. The inner tube flares from the 18 mm diameter of the low-pressure region 32 to 31 mm external diameter in an expansion region 33 over a length of 78 mm. Twelve passages 34 of 3 mm diameter are provided between the low-pressure region 32, downstream of the constriction 31, and an annular clearance gap 35 between the inner surface of the seal tube 21 and the outer surface of the inner tube 22. The thickness of the annular clearance gap 35 between seal tube 21 and the exterior surface of the inner tube 22 is 0.2 mm.

The seal tube 21 comprises seven parallel 7mm wide square-cut grooves 36 cut into the inner surface of the seal tube 21 facing the inner tube 22 in the overlapping region. The grooves extend from a position in the low pressure region 32 adjacent the passages 34 upwards towards and beyond where the inner tube 22 is connected to the lowermost portion 30 of the heat exchange tubes. It may be seen that providing the grooves in this way allows for a greater number to be present than if they were cut onto the exterior surface of the inner tube 22.

In this embodiment, a further six parallel 7mm wide square-cut grooves 37 are cut into the exterior surface of the inner tube 22 from a position adjacent the passages 34 downwards towards the expansion region 33.

The lengths of the inner tube 22 and seal tube 21 are such that the passages 34 and open ends of the inner tube 22 are within the seal tubes 21 both at start up, i.e. with the apparatus at ambient temperature and at normal operating temperature.

A flange 38 is provided on a lowermost portion of the seal tube 21, beyond the end of the overlapping region, to enable fixing of the tube seal device 20 to a tubesheet.

## Claims

1. A tube seal device (20) suitable for use in a heat exchange reactor comprising one or more tubes, said tube seal device comprising a seal tube (21) and an inner tube (22) disposed within the seal tube to provide an overlapping region, said inner tube having within said overlapping region, (i) an interior constriction (31) of reduced cross sectional area forming a low-pressure region (32), (ii) an expansion region (33) adjacent the constriction of cross sectional area greater than that of the constriction, and (iii) one or more passages (34) through the wall of the inner tube connecting said low-pressure region to the exterior of the inner tube, **characterised in that** the tube seal device further comprises one or more grooves (36) arranged to disrupt the flow of gas through the tube seal device, said one or more grooved being formed around an inner face of the seal tube (21) in the overlapping region corresponding to the low-pressure region of the inner tube.

2. A tube seal device according to claim 1, wherein one or more grooves are additionally provided in the overlapping region corresponding to the expansion region (33) of the inner tube (22).

3. A tube seal device according to claim 2, wherein the one or more grooves in the expansion region are provided on an outer face of the inner tube (22) or on the inner face of the seal tube (21), preferably on the outer face of the inner tube.

4. A tube seal device according to any one of claims 1 to 3, comprising between 1 and 30 grooves, preferably between 5 and 20 grooves, located on the seal tube (21) in the overlapping region corresponding to the low-pressure region (32) of the inner tube (22).

5. A tube seal device according to any one of claims 1 to 4, wherein the one or more grooves (36) have a square or rectangular form, or are U-shaped, V-shaped, or any combination of these.

6. A heat exchange reactor comprising one or more heat exchange tubes (17) comprising the tube seal device of any one of claims 1 to 5.

7. A heat exchange reactor according to claim 6, comprising a process fluid feed zone (11), a heat exchange zone (12), and a process fluid off-take zone (13), first and second boundary means (14, 15) separating said zones from one another, one or more heat exchange tubes (17) fastened to one of said boundary means and extending through the heat exchange zone, and a tube seal device (20) for each heat exchange tube, said tube seal device comprising a seal tube (21) and an inner tube (22), wherein the seal tube of the tube seal device is fastened to one of said boundary means and disposed substantially coaxially with the inner tube such that the inner tube is in sliding engagement with its associated seal tube thereby forming the overlapping region.

8. A heat exchange reactor according to claim 7, wherein the heat exchange tubes contain a steam reforming catalyst.

9. A heat exchange reactor according claim 7 or claim 8, wherein the tube seal device is fastened to the boundary means (15) between the heat exchange zone (12) and the off-take zone (13) .

10. A heat exchange reactor according to claim 8 or claim 9, in the form of a heat exchange steam reformer operatively connected to partial combustion means designed to effect partial combustion of a process fluid after the latter has passed through the tubes and to supply the gas, after said partial combustion, to the heat exchange steam reformer as a heat exchange medium.

11. A heat exchange reactor according to claim 10, wherein the partial combustion means includes a bed of reforming catalyst through which the partially combusted gas passes before supply thereof to the heat exchange reformer as the heat exchange medium.

12. A process comprising the steps of: (a) feeding a process fluid to a heat exchange reactor having a process fluid feed zone (11) separated from a heat exchange zone (12) by boundary means (14); (b) passing said process fluid from said process fluid feed zone through one or more heat exchange tubes (17) extending through said heat exchange zone, wherein said process fluid is subjected to heat exchange with a heat exchange medium at a lower pressure than the process fluid passing through the tubes in said heat exchange zone; (c) passing the process fluid from said heat exchange tubes to a process fluid off-take zone (13) separated from said heat exchange zone by second boundary means (15); (d) subjecting the process fluid from said process fluid off-take zone to a further processing step, and; (e) passing the resultant processed process fluid through the heat exchange zone (12) as the heat exchange medium, wherein each of said one or more heat exchange tubes (17) is fastened to one of said boundary means and engages with the other of said boundary means by means of a tube seal device, wherein the tube seal device comprises a seal tube (21) fastened to the other of said boundary means and an inner tube (22) connected to each heat exchange tube and disposed within the seal tube to provide an overlapping region, said inner tube having within said overlapping region, (i) an interior constriction of reduced cross sectional area forming a low-pressure region (32), (ii) an expansion region (33) of cross sectional area greater than that of the constriction downstream, in the direction of flow of said process fluid, of said low-pressure region, and (iii) one or more passages (34) through the wall of the inner tube connecting said low-pressure region to the exterior of the inner tube, **characterised in that** the tube seal device comprises one or more grooves (36) arranged to disrupt the flow of gas through the tube seal device, said one or more grooved being formed around an inner face of the seal tube (21) in the overlapping region corresponding to the low-pressure region of the inner tube.

13. A process according to claim 12, wherein the heat exchange reactor comprises a heat exchange reformer containing one or more externally heated tubes containing a steam reforming catalyst through which a reformer feed is passed to generate a synthesis gas, and wherein the heat exchange medium used to heat the tubes is at a lower pressure than the reformer feed.

14. A process according to claim 13, wherein the exchange steam reformer is operatively connected to partial combustion means designed to effect partial combustion of a process fluid after the latter has passed through the tubes and to supply the gas, after said partial combustion, to the heat exchange steam reformer as a heat exchange medium

15. A process according to claim 14, wherein the partial combustion means includes a bed of reforming catalyst through which the partially combusted gas passes before supply thereof to the heat exchange reformer as the heat exchange medium.

## Patentansprüche

1. Rohrdichtungsvorrichtung (20), die zur Verwendung in einem Wärmeaustauschreaktor geeignet ist, der ein oder mehrere Rohre umfasst, wobei die Rohrdichtungsvorrichtung ein Dichtungsrohr (21) und ein Innenrohr (22) umfasst, das innerhalb des Dichtungsrohrs angeordnet ist, um eine Überlappungsregion bereitzustellen, wobei das Innenrohr innerhalb der Überlappungsregion aufweist, (i) eine innere Einschnürung (31) mit verringertem Querschnittsbereich, die eine Niederdruckregion (32) bildet, (ii) eine an die Einschnürung angrenzende Ausdehnungsregion (33) mit einem Querschnittsbereich, der größer als der der Einschnürung ist, und (iii) einen oder mehrere Durchgänge (34) durch die Wand des Innenrohrs, die die Niederdruckregion mit dem Äußeren des Innenrohrs verbinden,
**dadurch gekennzeichnet, dass** die Rohrdichtungsvorrichtung ferner eine oder mehrere Rillen (36) umfasst, die angeordnet sind, um die Gasströmung durch die Rohrdichtungsvorrichtung zu unterbrechen, wobei die eine oder die mehreren Rillen um eine innere Fläche des Dichtungsrohrs (21) in der überlappenden Region ausgebildet sind, die der Niederdruckregion des Innenrohrs entspricht.

2. Rohrdichtungsvorrichtung nach Anspruch 1, wobei in der Überlappungsregion, die der Ausdehnungsregion (33) des Innenrohrs (22) entspricht, zusätzlich eine oder mehrere Rillen bereitgestellt sind.

3. Rohrdichtungsvorrichtung nach Anspruch 2, wobei die eine oder mehreren Rillen in der Ausdehnungsregion auf einer äußeren Fläche des Innenrohrs (22) oder auf der inneren Fläche des Dichtungsrohrs (21), vorzugsweise auf der äußeren Fläche des Innenrohrs, bereitgestellt sind.

4. Rohrdichtungsvorrichtung nach einem der Ansprüche 1 bis 3, umfassend zwischen 1 und 30 Rillen, vorzugsweise zwischen 5 und 20 Rillen, die sich auf dem Dichtungsrohr (21) in der der Niederdruckregion (32) des Innenrohrs (22) entsprechenden Überlappungsregion befinden.

5. Rohrdichtungsvorrichtung nach einem der Ansprüche 1 bis 4, wobei die eine oder mehreren Rillen (36) eine quadratische oder rechteckige Form aufweisen oder U-förmig, V-förmig oder eine beliebige Kombination davon sind.

6. Wärmeaustauschreaktor, umfassend ein oder mehrere Wärmeaustauschrohre (17), die die Rohrdichtungsvorrichtung nach einem der Ansprüche 1 bis 5 umfassen.

7. Wärmeaustauschreaktor nach Anspruch 6, umfassend eine Prozessfluidzufuhrzone (11), eine Wärmeaustauschzone (12) und eine Prozessfluidabnahmezone (13), erste und zweite Begrenzungsmittel (14, 15), die die Zonen voneinander trennen, ein oder mehrere Wärmeaustauschrohre (17), die an einem der Begrenzungsmittel befestigt sind und sich durch die Wärmeaustauschzone erstrecken, und eine Rohrdichtungsvorrichtung (20) für jedes Wärmetauscherrohr, wobei die Rohrdichtungsvorrichtung ein Dichtungsrohr (21) und ein Innenrohr (22) umfasst, wobei das Dichtungsrohr der Rohrdichtungsvorrichtung an einer der Begrenzungseinrichtungen befestigt ist und im Wesentlichen koaxial mit dem Innenrohr angeordnet ist, sodass das Innenrohr in gleitendem Eingriff mit seinem zugehörigen Dichtungsrohr steht, wodurch die Überlappungsregion gebildet wird.

8. Wärmeaustauschreaktor nach Anspruch 7, wobei die Wärmeaustauschrohre einen Dampfreformierungskatalysator enthalten.

9. Wärmeaustauschreaktor nach Anspruch 7 oder 8, wobei die Rohrdichtungsvorrichtung an den Begrenzungsmitteln (15) zwischen der Wärmeaustauschzone (12) und der Abnahmezone (13) befestigt ist.

10. Wärmetauschreaktor nach Anspruch 8 oder 9 in Form eines Wärmetauschdampfreformers, der betriebsmäßig mit einem Teilverbrennungsmittel verbunden ist, das dazu bestimmt ist, eine Teilverbrennung eines Prozessfluids zu bewirken, nachdem dieses die Rohre passiert hat, und das Gas nach dieser Teilverbrennung dem Wärmetauschdampfreformer als Wärmeaustauschmedium zuzuführen.

11. Wärmeaustauschreaktor nach Anspruch 10, wobei das Teilverbrennungsmittel ein Bett aus Reformierungskatalysator einschließt, durch das das teilweise verbrannte Gas strömt, bevor es dem Wärmeaustauschreformer als Wärmeaustauschmedium zugeführt wird.

12. Prozess, umfassend die folgenden Schritte: (a) Zuführen eines Prozessfluids zu einem Wärmetauschreaktor, der eine Prozessfluidzufuhrzone (11) aufweist, die von einer Wärmetauschzone (12) durch Begrenzungsmittel (14) getrennt ist; (b) Leiten des Prozessfluids aus der Prozessfluidzufuhrzone durch ein oder mehrere Wärmeaustauschrohre (17), die sich durch die Wärmeaustauschzone erstrecken, wobei das Prozessfluid einem Wärmeaustausch mit einem Wärmeaustauschmedium unter einem niedrigeren Druck als dem des Prozessfluids, das durch die Rohre in der Wärmeaustauschzone fließt, unterzogen wird; (c) Leiten des Prozessfluids aus den Wärmetauscherrohren zu einer Prozessfluidabnahmezone (13), die von der Wärmetauscherzone durch ein zweites Begrenzungsmittel (15) getrennt ist; (d) Unterziehen des Prozessfluids aus der Prozessfluidabnahmezone einem weiteren Verarbeitungsschritt, und; (e) Leiten des resultierenden verarbeiteten Prozessfluids durch die Wärmeaustauschzone (12) als Wärmeaustauschmedium, wobei jedes der einen oder mehreren Wärmeaustauschrohre (17) an einem der Begrenzungsmittel befestigt ist und mit dem anderen der Begrenzungsmittel mittels einer Rohrdichtungsvorrichtung in Eingriff steht, wobei die Rohrdichtungsvorrichtung ein an dem anderen der Begrenzungsmittel befestigtes Dichtungsrohr (21) und ein Innenrohr (22) umfasst, das mit jedem Wärmeaustauschrohr verbunden und innerhalb des Dichtungsrohrs angeordnet ist, um eine Überlappungsregion bereitzustellen, wobei das Innenrohr innerhalb der Überlappungsregion (i) eine innere Einschnürung mit verringertem Querschnittsbereich aufweist, die eine Niederdruckregion (32) bildet, (ii) eine Ausdehnungsregion (33) mit einem Querschnittsbereich, der größer ist als der der Einschnürung, stromabwärts, in Strömungsrichtung des Prozessfluids, der Niederdruckregion, und (iii) einen oder mehrere Durchgänge (34) durch die Wand des Innenrohrs, die die Niederdruckregion mit der Außenseite des Innenrohrs verbinden, **dadurch gekennzeichnet, dass** die Rohrdichtungsvorrichtung eine oder mehrere Rillen (36) umfasst, die angeordnet sind, um die Gasströmung durch die Rohrdichtungsvorrichtung zu unterbrechen, wobei die eine oder mehreren Rillen um eine innere Fläche des Dichtungsrohrs (21) in der Überlappungsregion ausgebildet sind, die der Niederdruckregion des inneren Rohrs entspricht.

13. Prozess nach Anspruch 12, wobei der Wärmeaustauschreaktor einen Wärmeaustauschreformer umfasst, der ein oder mehrere von außen beheizte Rohre enthält, die einen Dampfreformierungskatalysator enthalten, durch den ein Reformereinsatz zur Erzeugung eines Synthesegases geleitet wird, und wobei das Wärmeaustauschmedium, das zur Beheizung der Rohre verwendet wird, unter einem niedrigeren Druck steht als der Reformereinsatz.

14. Prozess nach Anspruch 13, wobei der Wärmetauschdampfreformer funktionell mit Teilverbrennungsmitteln verbunden ist, die dazu bestimmt sind, eine Teilverbrennung eines Prozessfluids zu bewirken, nachdem dieses durch die Rohre geleitet wurde, und das Gas nach dieser Teilverbrennung dem Wärmetauschdampfreformer als Wärmeaustauschmedium zuzuführen.

15. Prozess nach Anspruch 14, wobei das Teilverbrennungsmittel ein Bett aus Reformierungskatalysator einschließt, durch das das teilweise verbrannte Gas strömt, bevor es dem Wärmeaustauschreformer als Wärmeaustauschmedium zugeführt wird.

## Revendications

1. Dispositif d'étanchéité de tube (20) approprié pour une utilisation dans un réacteur d'échange de chaleur comprenant un ou plusieurs tubes, ledit dispositif d'étanchéité de tube comprenant un tube d'étanchéité (21) et un tube interne (22) disposé à l'intérieur du tube d'étanchéité afin de fournir une région de chevauchement, ledit tube interne ayant à l'intérieur de ladite région de chevauchement, (i) un étranglement (31) interne d'une surface de section transversale réduite formant une région basse pression (32), (ii) une région d'expansion (33) adjacente à l'étranglement d'une surface de section transversale plus grande que celle de l'étranglement, et (iii) un ou plusieurs passages (34) à travers la paroi du tube interne reliant ladite région basse pression à l'extérieur du tube interne, **caractérisé en ce que** le dispositif d'étanchéité de tube comprend en outre une ou plusieurs rainures (36) conçues pour perturber l'écoulement du gaz à travers le dispositif d'étanchéité de tube, ladite ou lesdites rainures étant formées autour d'une face interne du tube d'étanchéité (21) dans la région de chevauchement correspondant à la région basse pression du tube interne.

2. Dispositif d'étanchéité de tube selon la revendication 1, dans lequel une ou plusieurs rainures sont en outre prévues dans la région de chevauchement correspondant à la région d'expansion (33) du tube interne (22).

3. Dispositif d'étanchéité de tube selon la revendication 2, dans lequel la ou les rainures dans la région d'expansion sont prévues sur une face externe du tube interne (22) ou sur la face interne du tube d'étanchéité (21), de préférence sur la face externe du tube interne.

4. Dispositif d'étanchéité de tube selon l'une quelconque des revendications 1 à 3, comprenant entre 1 et 30 rainures, de préférence entre 5 et 20 rainures, situées sur le tube d'étanchéité (21) dans la région de chevauchement correspondant à la région basse pression (32) du tube interne (22).

5. Dispositif d'étanchéité de tube selon l'une quelconque des revendications 1 à 4, dans lequel la ou les rainures (36) ont une forme carrée ou rectangulaire, ou sont en forme de U, de V, ou de toute combinaison de ces formes.

6. Réacteur d'échange de chaleur comprenant un ou plusieurs tubes d'échange de chaleur (17) comprenant le dispositif d'étanchéité de tube selon l'une quelconque des revendications 1 à 5.

7. Réacteur d'échange de chaleur selon la revendication 6, comprenant une zone d'alimentation en fluide de traitement (11), une zone d'échange de chaleur (12), et une zone d'évacuation (13) de fluide de traitement, des premier et second moyens de délimitation (14, 15) séparant lesdites zones les unes des autres, un ou plusieurs tubes d'échange de chaleur (17) fixés à l'un desdits moyens de délimitation et s'étendant à travers la zone d'échange de chaleur, et un dispositif d'étanchéité de tube (20) pour chaque tube d'échange de chaleur, ledit dispositif d'étanchéité de tube comprenant un tube d'étanchéité (21) et un tube interne (22), dans lequel le tube d'étanchéité du dispositif d'étanchéité de tube est fixé à l'un desdits moyens de délimitation et disposé de manière sensiblement coaxiale avec le tube interne de sorte que le tube interne est en prise coulissante avec son tube d'étanchéité associé, formant ainsi la région de chevauchement.

8. Réacteur d'échange de chaleur selon la revendication 7, dans lequel les tubes d'échange de chaleur contiennent un catalyseur de reformage à la vapeur.

9. Réacteur d'échange de chaleur selon la revendication 7 ou la revendication 8, dans lequel le dispositif d'étanchéité de tube est fixé au moyen de délimitation (15) entre la zone d'échange de chaleur (12) et la zone d'évacuation (13).

10. Réacteur d'échange de chaleur selon la revendication 8 ou la revendication 9, sous la forme d'un reformeur à vapeur d'échange de chaleur relié de manière opérationnelle à un moyen de combustion partielle destiné à effectuer une combustion partielle d'un fluide de traitement après que celui-ci est passé à travers les tubes et pour fournir le gaz, après ladite combustion partielle, au reformeur à vapeur d'échange de chaleur en tant que milieu d'échange de chaleur.

11. Réacteur d'échange de chaleur selon la revendication 10, dans lequel le moyen de combustion partielle comporte un lit de catalyseur de reformage à travers lequel le gaz partiellement brûlé passe avant la fourniture de celui-ci au reformeur d'échange de chaleur en tant que milieu d'échange de chaleur.

12. Procédé comprenant les étapes consistant à : (a) alimenter en fluide de traitement un réacteur d'échange de chaleur ayant une zone d'alimentation en fluide de traitement (11) séparée d'une zone d'échange de chaleur (12) par un moyen de délimitation (14) ; (b) faire passer ledit fluide de traitement à partir de ladite zone d'alimentation en fluide de traitement à travers un ou plusieurs tubes d'échange de chaleur (17) s'étendant à travers ladite zone d'échange de chaleur, dans lequel ledit fluide de traitement est soumis à un échange de chaleur avec un milieu d'échange de chaleur à une pression inférieure à celle du fluide de traitement passant à travers les tubes dans ladite zone d'échange de chaleur ; (c) faire passer le fluide de traitement à partir desdits tubes d'échange de chaleur vers une zone d'évacuation (13) de fluide de traitement séparée de ladite zone d'échange de chaleur par un second moyen de délimitation (15) ; (d) soumettre le fluide de traitement à partir de ladite zone d'évacuation de fluide de traitement à une étape de traitement supplémentaire, et ; (e) faire passer le fluide de traitement traité résultant à travers la zone d'échange de chaleur (12) en tant que milieu d'échange de chaleur, dans lequel chacun dudit ou desdits tubes d'échange de chaleur (17) est fixé à l'un desdits moyens de délimitation et en prise avec l'autre desdits moyens de délimitation au moyen d'un dispositif d'étanchéité de tube, dans lequel le dispositif d'étanchéité de tube comprend un tube d'étanchéité (21) fixé à l'autre desdits moyens de délimitation et un tube interne (22) relié à chaque tube d'échange de chaleur et disposé à l'intérieur du tube d'étanchéité afin de fournir une région de chevauchement, ledit tube interne ayant à l'intérieur de ladite région de chevauchement, (i) un étranglement interne d'une surface de section transversale réduite formant une région basse pression (32), (ii) une région d'expansion (33) d'une surface de section transversale plus grande que celle de l'étranglement en aval, dans la direction d'écoulement dudit fluide de traitement, de ladite région basse pression, et (iii) un ou plusieurs passages (34) à travers la paroi du tube interne reliant ladite région basse pression à l'extérieur du tube interne, **caractérisé en ce que** le dispositif d'étanchéité de tube comprend une ou plusieurs rainures (36) conçues pour perturber l'écoulement du gaz à travers le dispositif d'étanchéité de tube, ladite ou lesdites rainures étant formées autour d'une face interne du tube d'étanchéité (21) dans la région de chevauchement correspondant à la région basse pression du tube interne.

13. Procédé selon la revendication 12, dans lequel le réacteur d'échange de chaleur comprend un reformeur d'échange de chaleur contenant un ou plusieurs tubes chauffés extérieurement contenant un catalyseur de reformage à la vapeur à travers lequel une alimentation de reformage est passée afin de générer un gaz de synthèse, et dans lequel le milieu d'échange de chaleur utilisé pour chauffer les tubes est à une pression inférieure à celle de l'alimentation de reformage.

14. Procédé selon la revendication 13, dans lequel le reformeur à vapeur d'échange est relié de manière opérationnelle à un moyen de combustion partielle destiné à effectuer une combustion partielle d'un fluide de traitement après le passage de celui-ci à travers les tubes et pour fournir le gaz, après ladite combustion partielle, au reformeur à vapeur d'échange de chaleur en tant que milieu d'échange de chaleur.

15. Procédé selon la revendication 14, dans lequel le moyen de combustion partielle comporte un lit de catalyseur de reformage à travers lequel le gaz partiellement brûlé passe avant l'alimentation de celui-ci au reformeur d'échange de chaleur en tant que milieu d'échange de chaleur.
